# EUROPÄISCHE PATENTSCHRIFT

(11) **EP 4 585 325 B1**
(45) Veröffentlichungstag und Bekanntmachung des Hinweises auf die Patenterteilung: **07.01.2026**
(21) Anmeldenummer: 24151288.8
(22) Anmeldetag: 11.01.2024
(51) Int. Cl.: B22C 9/04, B22C 9/22, B22C 9/24, B22D 25/02, H01M 50/224, B22D 21/04, B60K 1/04, B22D 19/00, B22D 25/04, H01M 10/613, H01M 10/6556, B22D 17/00, H01M 50/213, H01M 50/249, H01M 10/625

(54) **BATTERIETRÄGERDRUCKGUSSTEIL SOWIE VERFAHREN ZUR HERSTELLUNG EINES BATTERIETRÄGERDRUCKGUSSTEILS**
BATTERY CARRIER DIE-CAST PART AND METHOD FOR PRODUCING A BATTERY CARRIER DIE-CAST PART
PIÈCE COULÉE SOUS PRESSION DE SUPPORT DE BATTERIE ET PROCÉDÉ DE FABRICATION D'UNE PIÈCE COULÉE SOUS PRESSION DE SUPPORT DE BATTERIE

(43) Veröffentlichungstag der Anmeldung: 16.07.2025
(73) Patentinhaber: Nemak, S.A.B. de C.V., 66017 García, Nuevo León (MX)
(72) Erfinder: FLECK, Thomas, 51107 Köln (DE); HEUEIS, Stefan, 61440 Oberursel (DE); KOCH, Tammo, 65195 Wiesbaden (DE); LIST, Sascha Florian, 65510 Idstein (DE); MÜLLER, Andreas, 65428 Rüsselsheim (DE); SCHEIL, Jan, 65185 Wiesbaden (DE); SONNBERGER, Stefan, 61285 Usingen (DE); RAO, Kamalakkannan Mohan, 43-300 Bielsko-Biala (PL)
(74) Vertreter: Cohausz & Florack

(56) Entgegenhaltungen:
- EP-A1- 4 257 391
- WO-A1-2017/045877
- DE-A1- 102013 107 668
- DE-A1- 102015 217 810
- DE-A1- 102017 111 021
- DE-B3- 102016 115 611

## Beschreibung

Die Erfindung betrifft ein Batterieträgerdruckgussteil zur zumindest teilweisen Begrenzung eines Aufnahmeraums zumindest einer als Antriebsenergiespeicher für ein elektrisch angetriebenes Fahrzeug dienenden Batteriezelle und/oder zumindest eines Batteriemoduls. Die Erfindung betrifft ebenfalls ein Verfahren zur Herstellung eines vorgenannten Batterieträgerdruckgussteils aus einer Leichtmetallschmelze, insbesondere aus einer Schmelze einer Aluminiumlegierung, im Hochdruckguss.

Elektrisch angetriebene Fahrzeuge der hier in Rede stehenden Art führen in der Regel eine Mehrzahl an Batteriemodulen und/oder Batteriezellen mit sich, die als Antriebsenergiespeicher dienen und die für den Fahrbetrieb benötigte elektrische Energie zur Verfügung stellen. Insbesondere handelt es sich bei einem elektrisch angetriebenen Fahrzeug der hier in Rede stehenden Art um ein Elektroauto, welches im Wesentlichen ausschließlich von einem Elektromotor angetrieben wird. Alternativ kann das vorgenannte Batterieträgerdruckgussteil auch bei einem Hybrid-Fahrzeug eingesetzt werden, welches zusätzlich zu einem Elektromotor noch einen Verbrennungsmotor aufweist.

Da Batteriemodule und/oder Batteriezellen regelmäßig ein hohes Gewicht aufweisen, stellt ihre Platzierung im Fahrzeug nicht nur aus statischer Sicht hohe Anforderungen an die Tragstruktur des Fahrzeugs, sondern beeinflusst zusätzlich auch die im Fahrbetrieb auftretenden dynamischen Kräfte.

Im Hinblick auf das Fahrverhalten hat sich eine Platzierung der einzelnen Batteriemodule und/oder einzelner Batteriezellen, im Bodenbereich des Fahrzeugs als vorteilhaft herausgestellt. Um dies zu ermöglichen, sind Batterieträger vorgeschlagen worden, die im Wesentlichen flach und plattenartig ausgebildet sind. Derartige Batterieträger lassen sich im Bodenbereich des Fahrzeugs anordnen und mit dem Chassis des Fahrzeugs verbinden.

An die statische und dynamische Belastbarkeit voranstehend erläuterter Batterieträger werden demnach erhebliche Anforderungen gestellt. So soll der Batterieträger nicht nur in der Lage sein, die einzelnen Batteriemodule zu tragen, sondern auch die dynamischen Lasten aufnehmen, die im Fahrbetrieb des Fahrzeugs entstehen. Ebenfalls soll der Batterieträger die aufgenommenen und leicht entzündlichen Batteriemodule und/oder Batteriezellen, insbesondere im Falle eines Unfalls, bestmöglich schützen.

Darüber hinaus ist es vorteilhaft, wenn ein Batterieträger ein möglichst geringes Gewicht aufweist, so dass das Gesamtgewicht des Fahrzeugs durch den Batterieträger nicht übermäßig erhöht wird und Energie bei der Bewegung des Fahrzeugs eingespart werden kann. Weiterhin ist es vorteilhaft, Batterieträger möglichst kostengünstig herzustellen. Dies gestaltet sich als weitere Herausforderung, da trotz einer Gewichts- und Kostenreduktion die vorgenannten Anforderungen an die statische und dynamische Belastbarkeit von Batterieträgern erfüllt werden sollen.

Demnach stellen Batterieträger ein für die Sicherheit, Funktionsfähigkeit und Kosteneffektivität von Fahrzeugen entscheidendes Bauteil dar. Derartige Anforderungen an die Herstellung von Batterieträgern und deren Bauteilen führen mitunter zur Vorsehung von komplexen Geometrien der Batterieträger. Bedingt durch die komplexen Geometrien der Batterieträger werden häufig Fertigungsverfahren angewendet, bei denen mehrere Bauteile miteinander verbunden, insbesondere miteinander verschweißt, werden müssen. Die hierbei entstehenden Verbindungsstellen können allerdings zu Undichtigkeiten führen, so dass die von dem Batterieträger aufgenommenen Batteriemodule nicht zuverlässig vor dem Eindringen von Flüssigkeit, insbesondere von Wasser, geschützt sind.

Ebenfalls führen die an die Batterieträger gestellten Anforderungen hinsichtlich ihrer mechanischen Eigenschaften häufig dazu, dass die Batterieträger durch die Vorsehung von Crash- und Crush- Strukturen eine gewisse räumliche Ausdehnung aufweisen, so dass weniger Platz zur Aufnahme von Batteriemodulen und/oder Batteriezellen vorhanden ist.

DE 10 2016 115611 B3 betrifft einen Batterieträger für ein Elektrokraftfahrzeug, welcher in einem Unterflurbereich eines Elektrokraftfahrzeuges angeordnet ist, wobei der Batterieträger eine Wanne und einen Deckel aufweist und wobei die Wanne aus einem außen umlaufenden Rahmen sowie einem mit dem Rahmen gekoppelten Boden ausgebildet ist, wobei auf der dem Bodengegenüberliegenden Seite eine Öffnung ausgebildet ist und die Öffnung von einem Deckel geschlossen ist und dass der Rahmen aus einem Hohlprofil ausgebildet ist.

EP 4 257 391 A1 betrifft Batterieträger zur Aufnahme zumindest eines als Antriebsenergiespeicher für ein elektrisch angetriebenes Fahrzeug dienenden Batteriemoduls, wobei der Batterieträger mit einer Karosserie des Fahrzeugs verbindbar ist, umfassend: eine im Wesentlichen umlaufende Rahmenstruktur aufweisend Längsseiten und Querseiten zur Bildung eines Aufnahmebereichs für das zumindest eine Batteriemodul, wobei der Batterieträger einstückig aus einem Leichtmetallwerkstoff geformt, insbesondere einstückig aus einem Leichtmetallwerkstoff gegossen ist.

Vor diesem Hintergrund hat sich die Aufgabe ergeben, einen Batterieträger der in Rede stehenden Art anzugeben, welcher vorteilhafte statische und dynamische Eigenschaften sowie ein geringes Gewicht aufweist und zugleich eine möglichst geringe räumliche Ausdehnung hat. Des Weiteren soll ein Verfahren zur Herstellung eines solchen Batterieträgers angegeben werden, welches es ermöglicht, einen möglichst platzsparenden Batterieträger mit vorteilhaften statischen und dynamischen Eigenschaften sowie einem geringen Gewicht herzustellen.

Die vorgenannte Aufgabe wird erfindungsgemäß gemäß einem ersten Aspekt bei ein Batterieträgerdruckgussteil zur zumindest teilweisen Begrenzung eines Aufnahmeraums zumindest einer als Antriebsenergiespeicher für ein elektrisch angetriebenes Fahrzeug dienenden Batteriezelle und/oder zumindest eines Batteriemoduls dadurch gelöst, dass das Batterieträgerdruckgussteil zumindest einen sich im Wesentlichen entlang einer Längsachse erstreckenden Abschnitt aufweist, wobei der Abschnitt eine im Wesentlichen geschlossene Kontur aufweist, wobei die im Wesentlichen geschlossene Kontur einen Hohlraum umfasst, insbesondere einen Hohlraum einschließt, und wobei die geschlossene Kontur sich integral um den Hohlraum erstreckt.

Erfindungsgemäß wurde überraschenderweise festgestellt, dass sich im Druckgussverfahren ein Abschnitt umfassend eine im Wesentlichen geschlossene Kontur integral um einen Hohlraum fertigen lässt. Die im Druckgussverfahren herkömmlicherweise verwendeten Sandkerne weisen üblicherweise keine ausreichenden Festigkeiten auf, um den im Druckgussverfahren, insbesondere im Hochdruckgussverfahren auftretenden Drücken Stand zu halten.

Insofern sind aus dem bisherigen Stand der Technik lediglich Batterieträger bekannt, die eine zumindest teilweise offene Kontur aufweisen, so dass die verwendeten Formen, insbesondere die verwendeten metallischen Dauergussformen, nach dem Gussverfahren von dem Batterieträgerdruckgussteil entfernt werden können.

Vorzugsweise wird das Batterieträgerdruckgussteil im Druckgussverfahren in einer geteilten metallischen Dauerform (Druckgießform) hergestellt. Das druckgießfähige und flüssige Metall bzw. die flüssige Gusslegierung wird dabei unter hoher Geschwindigkeit und in den Formhohlraum gepresst und erstarrt unter hohem Druck rasch und mit hoher Wärmeabfuhr in der Dauerform. Derartig hergestellte Druckgussteile zeichnen sich durch die hohe Oberflächengüte, Maßgenauigkeit und Endkonturnähe aus.

Bei dem sich entlang der Längsachse erstreckenden Abschnitt handelt es sich insbesondere um eine Längsseite oder um eine Querseite des Batterieträgerdruckgussteils.

Vorzugsweise bedeutet eine im Wesentlichen umlaufende Kontur lediglich, dass die Kontur um die Längsachse des Abschnitts herum vollständig geschlossen ist. Vorzugsweise ist hierbei eine Umschließung um die Längsachse des Abschnitts herum gemeint. Hierfür kann es beispielsweise ausreichend sein, dass die Kontur um die Längsachse herum zumindest abschnittsweise vollständig geschlossen ist. Beispielweise können die Stirnseiten des sich entlang der Längsachse erstreckenden Abschnitts dennoch zumindest teilweise offen sein. Beispielweise weist der Abschnitt eine im Wesentlichen umlaufende geschlossene Kontur um die Längsachse herum auf.

Indem die im Wesentlichen geschlossene Kontur einen Hohlraum vollständig umfasst, insbesondere den Hohlraum einschließt, kann das Batterieträgerdruckgussteil in platzsparender Weise ausreichende Crash und Crush Eigenschaften zur Verfügung stellen. Vorzugsweise schließt die im Wesentlichen geschlossene Kontur den Hohlraum entlang der Längsachse des Abschnitts ein.

Eine integrale Erstreckung der geschlossenen Kontur um den Hohlraum bedeutet vorliegend insbesondere, dass sich der Abschnitt des Batterieträgerdruckgussteils einstückig um den Hohlraum herum, insbesondere in Längsrichtung des Abschnitts um den Hohlraum herum, erstreckt. In diesem Zusammenhang ist es weiter bevorzugt, dass das gesamte Batterieträgerdruckgussteil einstückig als ein Druckgussteil gefertigt ist.

Eine bevorzugte Ausgestaltung ist dadurch gekennzeichnet, dass das Batterieträgerdruckgussteil einstückig aus einem Leichtmetallwerkstoff, insbesondere aus einer Aluminiumlegierung, ausgebildet ist. Durch die einstückige Ausbildung des Batterieträgerdruckgussteils lässt sich in kostengünstiger Weise, nämlich durch ein Druckgussverfahren, ein Batterieträger herstellen, welcher kostengünstig zu fertigen ist und zusätzlich vorteilhafte statische und dynamische Eigenschaften aufweist. Durch die einstückige Fertigung eines solchen Batterieträgerdruckgussteils entfallen zum einen bestimmte Fertigungsschritte, da einzelne Komponenten des Batterieträgerdruckgussteils nicht nachträglich miteinander verbunden werden müssen und zum anderen können anfällige Verbindungbereiche des Batterieträgerdruckgussteils vermieden werden. Ein derartiges Batterieträgerdruckgussteil weist insbesondere vorteilhafte Eigenschaften bezüglich der Biegesteifigkeit und der Torsionssteifigkeit auf. Darüber hinaus bietet das Batterieträgerdruckgussteil durch die Einstückigkeit vorteilhafte Eigenschaften für die Einhaltung geforderter Toleranzen, zur Erreichung von Dichtigkeitsanforderungen und für das Verhältnis Gewicht des Batterieträgerdruckgussteils zu verfügbarer Fläche für Batteriezellen und/oder Batteriemodule. Vorliegend kann ein einstückiges Batterieträgerdruckgussteil ein einteiliges Batterieträgerdruckgussteil sein.

Eine weitere bevorzugte Ausgestaltung ist dadurch gekennzeichnet, dass ein Batterieträger durch eine Mehrzahl von Batterieträgerdruckgussteilen, insbesondere durch eine Mehrzahl von einstückig aus einem Leichtmetall gegossenen Batterieträgerdruckgussteilen, gebildet ist. Dies kann insbesondere in fertigungstechnischer Hinsicht vorteilhaft sein, da beispielsweise auch kleinere Gießmaschinen zur Herstellung eines Batterieträgers genutzt werden können.

Nach einer weiteren bevorzugten Ausgestaltung ist es bevorzugt, ein Batterieträgerdruckgussteil mit weiteren Teilen des Batterieträgers zu verbinden, wobei die weiteren Teile des Batterieträgers insbesondere herkömmlich gefertigt sind. Auch hierdurch können in fertigungstechnischer Hinsicht Vorteile erzielt werden, da durch kleinere Batterieträgerdruckgussbauteile bestehende Fertigungsinfrastruktur verwendet werden kann.

Insbesondere ist es bevorzugt, dass das Batterieträgerdruckgussteil zumindest eine Querseite und/oder zumindest einen Quersteg bildet, wodurch vorzugsweise die Knicksicherheit des gesamten Batterieträgers gesteigert werden kann.

Eine weitere bevorzugte Ausgestaltung ist dadurch gekennzeichnet, dass der zumindest eine Abschnitt zumindest einen Teil mindestens einer Längsseite und/oder mindestens eine Querseite einer Rahmenstruktur bildet, und dass das Batterieträgerdruckgussteil insbesondere eine im Wesentlichen umlaufende Rahmenstruktur aufweisend Längsseiten und Querseiten bildet.

Vorzugsweise ist die umlaufende Rahmenstruktur im Wesentlichen rechteckig gebildet, wobei die Längsseiten jeweils im Wesentlichen parallel zueinander verlaufen und/oder wobei die Querseiten im Wesentlichen parallel zueinander verlaufen.

Dabei ist das von dem Aufnahmeraum eingeschlossene Volumen vorzugsweise dasjenige Volumen, die im eingebauten Zustand des Batterieträgerdruckgussteils in einem Fahrzeug im Wesentlichen horizontal zwischen der umlaufenden Rahmenstruktur verläuft und durch welche demnach zumindest eine Batteriezelle und/oder zumindest ein Batteriemodul aufgenommen werden kann. Insbesondere wird das Volumen des Aufnahmeraums von der umlaufenden Rahmenstruktur zumindest teilweise umschlossen, wobei das Volumen des Aufnahmeraums vorzugsweise durch die inneren Seitenflächen der Längsseiten und durch die inneren Seitenflächen der Querseiten der umlaufenden Rahmenstruktur begrenzt wird und sich demnach insbesondere innerhalb der inneren Seitenflächen der Längsseiten und der Querseiten der Rahmenstruktur erstreckt.

Eine weitere bevorzugte Ausgestaltung ist dadurch gekennzeichnet, dass jeweils zumindest ein Abschnitt die Längsseiten und/oder die Querseiten im Wesentlichen vollständig bildet. Hierdurch kann über zumindest eine gesamte Längsseite und/oder eine gesamte Querseite eine vorteilhafte Struktur, insbesondere eine einteilige Struktur, zur Verfügung gestellt werden, die ausreichende Crash und Crush Eigenschaften aufweist. Vorzugsweise bildet das Batterieträgerdruckgussteil sowohl die Längsseiten und die Querseiten, so dass eine im Wesentlichen einteilige Rahmenstruktur zur Verfügung gestellt werden kann.

Eine weitere bevorzugte Ausgestaltung ist dadurch gekennzeichnet, dass die im Wesentlichen geschlossene Kontur eines Abschnitts zumindest eine Öffnung für den Austritt von Gusskernen, insbesondere von Sandkernen, aufweist. Es hat sich überraschend gezeigt, dass auch Sandkerne für die Fertigung des Batterieträgerdruckgussteils, insbesondere des Batterieträgerdruckgussteils im Hochdruckguss, verwendet werden können. Mittels der Öffnungen für den Austritt von Gusskernen, können die Sandkerne nach dem Gussprozess aus den Hohlräumen entfernt werden. Vorzugsweise ist mindestens eine weitere Öffnung in der im Wesentlichen gegenüberliegenden Seite der geschlossenen Kontur gegenüber der Öffnung angeordnet. Hierdurch kann zum einen der Sandkern nach dem Gießverfahren besser aus dem Hohlraum entfernt werden und andererseits können die insbesondere miteinander fluchtenden Öffnungen in vorteilhafter Weise zur Anbindung des Batterieträgerdruckgussteils an die Karosserie eines Fahrzeugs genutzt werden. Es ist bevorzugt, dass auf gegenüberliegenden Seiten des mindestens einen Abschnitts miteinander fluchtende Öffnungen angeordnet sind. Diese sind insbesondere kreisförmig ausgebildet.

Eine weitere bevorzugte Ausgestaltung ist dadurch gekennzeichnet, dass die zumindest eine im Wesentlichen geschlossene Kontur eines Abschnitts durch eine Mehrzahl an Außenwänden gebildet wird, und dass die Mehrzahl an Außenwänden eine Wanddicke in einem Bereich von 1 mm bis 5 mm, insbesondere in einem Bereich von 2 mm bis 4 mm, besonders bevorzugt in einem Bereich von 2,5 mm bis 3,5 mm aufweist. Es wurde festgestellt, dass eine derartige Wanddicke oder Wandstärke in den vorgenannten Bereichen ausreichend sein kann, um die an das Batterieträgerdruckgussteil gestellten Anforderungen an statische und dynamische Belastungen zur Verfügung zu stellen. Zudem werden derart dünne Wandstärken erst durch die Verwendung eines Druckgussverfahren, insbesondere durch die Verwendung eines Hochdruckgussverfahrens, realisierbar. Durch derart dünne Wandstärken kann in vorteilhafter Weise zusätzlicher Bauraum zur Anordnung der Batteriezellen und/oder zumindest eines Batteriemoduls ermöglicht werden.

Eine weitere bevorzugte Ausgestaltung ist dadurch gekennzeichnet, dass die geschlossene Kontur des zumindest einen Abschnitts an ihrer Innenseite eine Profilstruktur zur Versteifung des Batterieträgerdruckgussteils umfasst, dass die Profilstruktur eine Mehrzahl an Profilstegen umfasst, und dass die Mehrzahl an Profilstegen im Wesentlichen ein Kastenprofil und/oder ein Wabenprofil bilden. Bei der Innenseite der geschlossenen Kontur des zumindest einen Abschnitts handelt es sich insbesondere um die zu dem Hohlraum gerichtete Seite der geschlossenen Kontur. Durch die Vorsehung einer Profilstruktur können insbesondere Crash-Strukturen geschaffen werden, die etwaige bei einem Unfall des Fahrzeugs entstehende Kräfte aufnehmen und die in dem Batterieträger angeordneten Batteriezellen schützen. Diese Crashstrukturen werden im Druckgussprozess vorzugsweise durch Sandkerne dargestellt.

Eine weitere bevorzugte Ausgestaltung ist dadurch gekennzeichnet, dass sich die Profilstruktur nur über einen Teil der Breite und/oder der Länge des Hohlraums erstreckt. Insbesondere erstreckt sich die Profilstruktur nicht in einem Mittelbereich des Hohlraums. Beispielsweise ist die Profilstruktur nur an der Innenseite der geschlossenen Kontur und damit an Randbereichen des Hohlraums angeordnet. Es hat sich überraschenderweise gezeigt, dass das Vorsehen von derartigen Profilstrukturen zu ausreichenden Crasheigenschaften des Batterieträgerdruckgussteils führt, wobei zudem das Gewicht und der Materialbedarf verringert werden können. Zusätzlich ist hierdurch in zuverlässiger Weise ein im Wesentlichen vollständiges Entfernen verwendeter Sandkerne möglich.

Eine weitere bevorzugte Ausgestaltung ist dadurch gekennzeichnet, dass der zumindest eine Abschnitt an seiner zu dem Aufnahmeraum zeigenden Außenkontur zumindest eine Aufnahme für zumindest eine Batteriezelle und/oder zumindest ein Batteriemodul aufweist, wobei die zumindest eine Aufnahme insbesondere zu der Außenkontur zumindest einer Batteriezelle und/oder zumindest eines Batteriemoduls korrespondiert, und wobei die zumindest eine Aufnahme vorzugsweise im Wesentlichen kurvenförmig, besonders bevorzugt halbzylindrisch, ausgebildet ist. Hierdurch können die Batteriezellen und/oder das zumindest eine Batteriemodul zuverlässig in dem Batterieträgerdruckgussteil fixiert werden. Dabei wird unter einer im Wesentlichen halbzylindrischen Form eine Form verstanden, die geringe Abweichungen zu einer idealen halbzylindrischen Form aufweist, beispielsweise konstruktions- und fertigungsbedingte Abweichungen. Eine solche Form ist besonders vorteilhaft für die Aufnahme einzelner Batteriezellen. Darüber hinaus sind auch weitere Formen der zumindest einen Aufnahme denkbar und in Abhängigkeit von weiteren möglichen Batterieformen vorteilhaft, beispielsweise eine rechteckige oder dreieckige Form, insbesondere mit abgerundeten Ecken.

Eine weitere bevorzugte Ausgestaltung ist dadurch gekennzeichnet, dass das Batterieträgerdruckgussteil im Hochdruckgussverfahren oder im Niederdruckgussverfahren unter Benutzung zumindest eines verlorenen Gusskerns, insbesondere zumindest eines verlorenen Sandkerns, gegossen ist. Vorgenannte Verfahren haben sich als besonders bevorzugt herausgestellt, da mit diesen dünne Wandstärken mit ausreichender Festigkeit zur Verfügung gestellt werden können. Bei dem vorgenannten Hochdruckgussverfahren handelt es sich insbesondere um ein Verfahren, bei dem eine Metallschmelze bei hohem Druck und hoher Geschwindigkeit in eine zwei- oder mehrteilige Dauerform eingebracht werden.

Beispielsweise handelt es sich bei dem verwendeten Sandkern um einen Sandkern umfassend Sand, insbesondere Quarzsand, einen Binder sowie zumindest ein Additiv, wobei der Binder insbesondere zumindest ein hydrophiles Polymer umfasst. Es wurde überraschenderweise festgestellt, dass Kerne, die aus einer solchen Zusammensetzung hergestellt werden, eine ausreichende Festigkeit aufweisen, um den Kräften standzuhalten, die während des Druckgusses, insbesondere des Hochdruckgusses, auftreten, und gleichzeitig in der Lage sind, aus einem inneren Hohlraum eines gegossenen Gegenstands, insbesondere nur mit Wasser, ausgewaschen zu werden.

Es ist bevorzugt, dass der verwendete Sandkern zwischen 1 und 20 Gew.-%, insbesondere zwischen 2 und 10 Gew.-%, Binder aufweist. Bei dem Binder kann es sich beispielsweise um einen aus dem Stand der Technik bekannten Binder zur Verwendung für Sandkerne handeln. Beispielsweise kann der verwendete Sandkern zwischen 0,5 und 15 Gew.-%, insbesondere zwischen 5 bis 10 Gew.-%, hydrophiles Polymer aufweisen. Beispielsweise umfasst das hydrophile Polymer Polysaccharid oder Polysaccharidderivate. Vorzugsweise weist der verwendete Sandkern 1 bis 10 Gew.-% Additive, beispielsweise puzzolanische Additive, auf. Hierdurch kann ein Sandkern zur Verfügung gestellt werden, der hohe Drücke aushält, so dass dieser im Rahmen eines Hochdruckgussverfahrens verwendet werden kann.

Beispielsweise kann es sich bei dem verwendeten Gusskern auch um einen aus dem Stand der Technik bekannten Salzkern handeln.

Eine weitere bevorzugte Ausgestaltung ist dadurch gekennzeichnet, dass der Hohlraum des zumindest einen Abschnitts mit einem energieabsorbierenden Material, insbesondere mit einem Schaum, gefüllt, insbesondere vollständig gefüllt, ist. Beispielsweise kann das energieabsorbierende Material auch weitere Eigenschaften, wie beispielsweise isolierende Eigenschaften aufweisen. Vorzugsweise ist der Schaum bereits während des Gussverfahrens vorhanden und/oder wird während des Gussverfahrens eingebracht und bildet somit eine Art Gusskern, der jedoch in dem Batterieträgerdruckgussbauteil verbleibt. Beispielsweise ist das energieabsorbierende Material, insbesondere der Schaum dazu ausgebildet, die im Falle eines Crashs auftretende Energie aufzunehmen, so dass die Crash und Crush Eigenschaften des Batterieträgerdruckgussteils weiter verbessert werden können. Vorzugsweise füllt das energieabsorbierende Material, insbesondere der Schaum, den gesamten Hohlraum aus. Indem das energieabsorbierende Material eine vorzugsweise nur geringe Dichte aufweist, kann trotz eines verhältnismäßig geringen Gewichts eine Verbesserung der mechanischen Eigenschaften des Batterieträgerdruckgussteils ermöglicht werden.

Beispielsweise kann das energieabsorbierende Material expandiertes Polypropylen (EPP), Polyurethan (PU) und/oder expandiertes Polyethylen (EPE, vernetzt oder unvernetzt) umfassend, insbesondere aus expandiertem Polypropylen (EPP), Polyurethan (PU) und/oder expandiertem Polyethylen (EPE, vernetzt oder unvernetzt) bestehen. Hierdurch kann beispielsweise eine Schaumstoffstruktur mit hoher thermischer Leitfähigkeit und vorteilhaften mechanischen Eigenschaften bei gleichzeitig niedrigem Gewicht ermöglicht werden. Beispielsweise kann es sich bei dem energieabsorbierenden Material auch um Metallschaum handeln.

Beispielsweise kann es sich bei dem energieabsorbierenden Material um ein Mehrkomponentensystem, insbesondere um ein 2-Komponentensystem, besonders bevorzugt um ein 2-Komponennten Kunststoffsystem, handeln, welches erst durch eine Vermischung der beiden Komponenten miteinander aushärtet

Eine weitere bevorzugte Ausgestaltung ist dadurch gekennzeichnet, dass der zumindest eine Abschnitt an seiner zu den Aufnahmeraum zeigenden Außenkontur zumindest einen Flansch, insbesondere einen umlaufenden Flansch, als Auflagefläche für eine Kühlplatte aufweist. Hierdurch kann eine zuverlässige Anbindung des Batterieträgerdruckgussteils an eine Kühlplatte ermöglicht werden. Vorzugsweise ist der Flansch mit Öffnungen versehen, die einen Anschluss der in der Kühlplatte angeordneten Kühlkanäle mit dem Hohlraum des zumindest einen Abschnitts ermöglicht.

Eine weitere bevorzugte Ausgestaltung ist dadurch gekennzeichnet, dass der zumindest eine Abschnitt an seinen Außenwänden Durchgänge zur Anordnung von Kühlkanälen, zumindest einer HV-Verbindung und/oder weiteren Verbindungen zwischen der zumindest einen Batteriezelle und/oder zumindest eines Batteriemoduls und der Umgebung des Batterieträgerdruckgussteils aufweist. Hierdurch können in vorteilhafter Weise im Betrieb des Batterieträgerdruckgussteils benötigte Durchgänge bereits während der Herstellung berücksichtigt werden, so dass diese nicht nachträglich in einem separaten Herstellungsschritt eingebracht werden müssen. Dies ist ebenfalls vorteilhaft für die mechanischen Eigenschaften Batterieträgerdruckgussteils und für eine geringere Gesamtkomplexität.

Eine weitere bevorzugte Ausgestaltung ist dadurch gekennzeichnet, dass das Batterieträgerdruckgussteil einstückig aus einer Aluminiumlegierung gegossen ist; und dass die Aluminiumlegierung vorzugsweise eine AlSi-Aluminiumgusslegierung ist. Es hat sich in der Praxis herausgestellt, dass die Verwendung eines einstückigen Batterieträgerdruckgussteils mit der vorgenannten Aluminiumlegierung zu einem Batterieträgerdruckgussteil mit bevorzugten statischen sowie dynamischen Eigenschaften führt, wobei zeitgleich ein reduziertes Gewicht zur Verfügung gestellt werden kann.

Vorgenannte Aufgabe wird gemäß einem zweiten Aspekt der vorliegenden Erfindung durch ein Verfahren zur Herstellung eines vorgenannten Batterieträgerdruckgussteils aus einer Leichtmetallschmelze, insbesondere aus einer Schmelze einer Aluminiumlegierung, im Hochdruckguss umfassend die folgenden Schritte, gelöst: Anordnen zumindest eines verlorenen Kerns und/oder zumindest eines energieabsorbierenden Materials, insbesondere eines Inlays, in einem Formhohlraum umfassend zumindest zwei bewegbare Formteile; Einfüllen der Leichtmetallschmelze mittels eines Angusssystems in den Formholraum, Geschlossenhalten des Formhohlraums bis die in den Formhohlraum eingefüllte Leichtmetallschmelze im Wesentlichen erstarrt ist, und Öffnen des Formhohlraums und Entnahme des in dem Formhohlraum abgeformten Batterieträgerdruckgussteils.

Hierdurch lässt sich im Rahmen eines Druckgussverfahrens, insbesondere im Rahmen eines Hochdruckgussverfahren, ein einstückiges Batterieträgerdruckgussteil zur Verfügung stellen, welches bei geringen Abmessungen vorteilhafte mechanische Eigenschaften aufweist. Hierbei geht die Erfindung von der für die Fachwelt überraschenden Feststellung aus, dass sich ein vorgenanntes Batterieträgerdruckgussteil in einem Stück gießtechnisch basierend auf einem Druckgießverfahren unter Verwendung von Gusskernen und/oder eines in dem Druckgussteil verbleibenden Inlays herstellen lässt. Beispielsweise werden die vorgenannt spezifizierten Sandkerne, Salzkerne, und/oder Schäume im Zusammenhang mit dem Verfahren gemäß dem zweiten Aspekt verwendet.

Gemäß einem dritten Aspekt wird die vorgenannte Aufgabe gelöst durch einen Batterieträger umfassend zumindest ein Batterieträgerdruckgussteil gelöst.

Beispielsweise kann zumindest ein Batterieträgerdruckgussteil den gesamten Batterieträger bilden.

Die oben beschriebenen, zunächst grundsätzlich für sich alleinstehenden Ausführungsformen und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Nachfolgend wird die Erfindung anhand von Ausführungsbeispielen zeigenden Zeichnungen näher erläutert. Es zeigen jeweils schematisch:
- Fig. 1: eine schematische Ansicht einer Oberseite eines Ausführungsbeispiels eines Batterieträgerdruckgussteils in einer perspektivischen Darstellung;

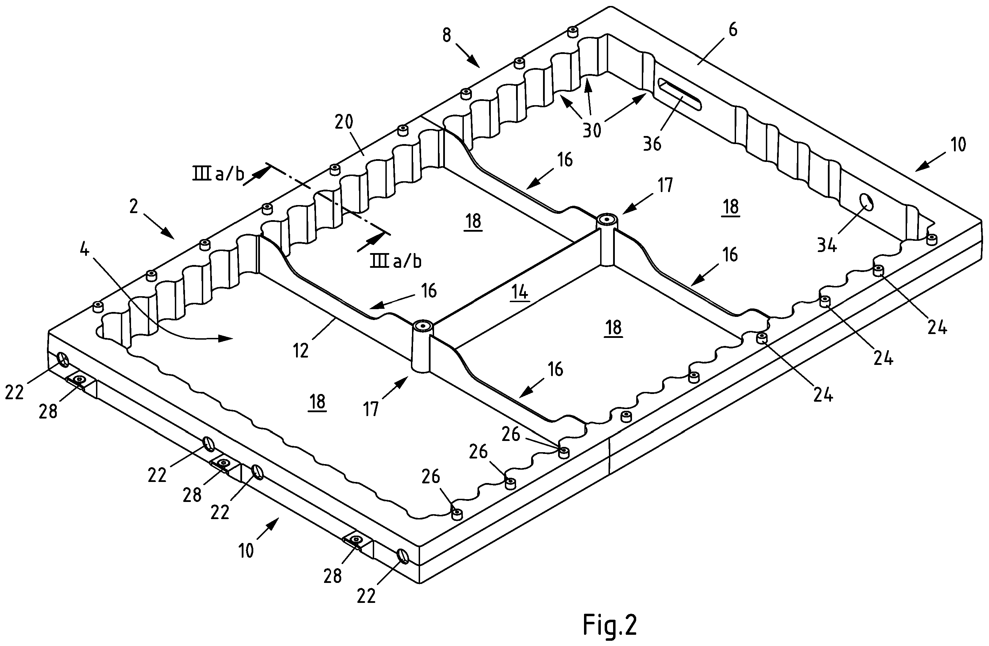

- Fig. 2: eine schematische Ansicht einer Unterseite des Ausführungsbeispiels des Batterieträgerdruckgussteils in einer perspektivischen Darstellung; und
- Fig. 3a bis b: Schnittansichten entlang der in Fig. 2 dargestellten Schnittlinie III.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

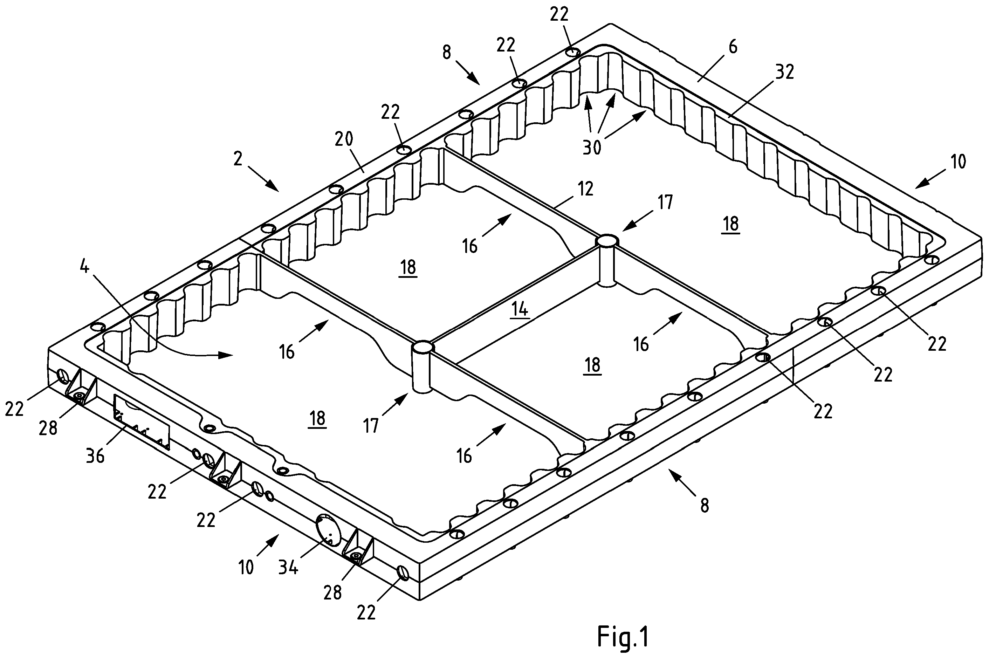

Fig. 1 zeigt ein Batterieträgerdruckgussteil 2 zur zumindest teilweisen Begrenzung eines Aufnahmeraums 4 zumindest einer als Antriebsenergiespeicher für ein elektrisch angetriebenes Fahrzeug dienenden Batteriezelle und/oder zumindest eines Batteriemoduls.

Das Batterieträgerdruckgussteil 2 weist eine umlaufende Rahmenstruktur 6 auf, wobei die umlaufende Rahmenstruktur 6 zwei Längsseiten 8 und zwei Querseiten 10 aufweist. Das Batterieträgerdruckgussteil 2 ist vorzugsweise einstückig aus einem Leichtmetallwerkstoff, insbesondere aus einer Aluminiumlegierung, gegossen.

Zwischen den Längsseiten 8 verlaufen zwei Querstege 12 im Wesentlichen parallel zu den Querseiten 10. Zudem verläuft zwischen den Querstegen 12 ein Längssteg 14 im Wesentlichen parallel zu den Längsseiten 8. Der Längssteg 14 ist im Wesentlichen rechteckig ausgebildet, wobei die Querstege 12 jeweils zwei Aussparungen 16 aufweisen. Durch die Querstege 12 und die Längsstege 14 werden insgesamt vier Bereiche18 zur Lagerung von Batteriezellen und/oder Batteriemodulen gebildet. Zwischen den Querstegen 12 und den Längsstegen 14 sind Anbindungshülsen 17 angeordnet, die beispielsweise der Anbindung des Batterieträgerdruckgussteils 2 an die Karosserie des Fahrzeugs dienen.

Die Längsseiten 8 des Batterieträgerdruckgussteils 2 werden vorliegend jeweils von sich entlang einer Längsseite erstreckenden Abschnitten 8 gebildet. Diese Abschnitte 8 weisen eine im Wesentlichen geschlossene Kontur 20 auf. Die im Wesentlichen geschlossene Kontur 20 der als Längsseiten gebildeten Abschnitte 8 weist eine Mehrzahl an Öffnungen 22 für den Austritt von Sandkernen auf. Zudem weisen die als Längsseiten gebildeten Abschnitte 8 an der der Mehrzahl der Öffnungen 22 gegenüberliegenden Seite kleinere in einem Vorsprung 24 angeordnete Durchgangslöcher 26 auf, die mit den jeweiligen Öffnungen 22 fluchten. Mittels der Öffnungen 22 und der Durchgangslöcher 26 kann der in den Abschnitten 8 angeordnete Kernsand in zuverlässiger Weise entfernt werden. Zudem könnten die Öffnungen 22 und die Durchgangslöcher 26 beispielsweise auch dazu verwendet werden, das Batterieträgerdruckgussteil 2 mit einem Fahrzeug, insbesondere mit einer Karosserie eines Fahrzeugs, zu verbinden.

Beispielsweise sind ebenfalls innerhalb der Querseiten 10 Öffnungen 22 angeordnet, durch den der Kernsand nach dem Gussprozess aus dem Batterieträgerdruckgussteil 2 entfernt werden kann. An den Querseiten 10 sind zudem Anbindungsbauteile 28 angeordnet, die einer Anbindung des Batterieträgerdruckgussteils 2 an andere Komponenten des Fahrzeugs, wie beispielsweise der Fahrzeugkarosse, dienen.

Es ist ferner erkennbar, dass sowohl die Längsseiten 8 als auch die Querseiten 10 an der zu dem Aufnahmeraums 4 zeigenden Außenkontur eine Mehrzahl an Aufnahmen 30 für die Aufnahme von Batteriezellen aufweisen. Die Aufnahmen 30 sind vorliegend halbzylindrisch ausgebildet. An ihrer Oberseite bilden die Aufnahmen 30 einen umlaufenden Flansch 32, der als Auflagefläche für eine Kühlplatte dient.

Ebenfalls weist der als Querseite 10 ausgebildete Abschnitt an seinen zueinander gegenüberliegenden Außenwänden korrespondierende Durchgänge 34 und 36 auf. Die Durchgänge 34 und/oder 36 können beispielsweise dazu dienen, die in dem Batterieträgergussteil 2 angeordneten Batteriezellen und/oder Batteriemodule mit anderen Bauteilen, wie beispielsweise dem Elektromotor zu verbinden. Ebenfalls ist es denkbar, dass die Durchgänge 34 und/oder 36 zur Verbindung einer Kühlplatte mit einem Kühlkreislauf dienen.

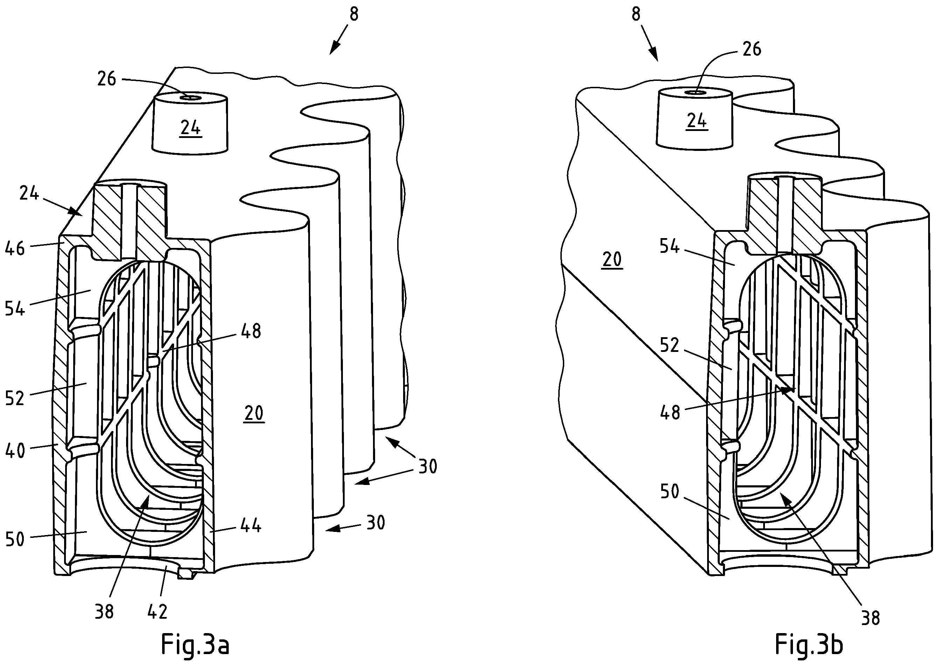

Fig. 3a und b zeigen Schnittansichten des als Längsseite gebildeten Abschnitts 8. Es ist erkennbar, dass der Abschnitt 8 von einer im Wesentlichen geschlossenen Kontur 20 umschlossen wird. Innerhalb der geschlossenen Kontur 20 ist ein Hohlraum 38 eingeschlossen, wobei sich die geschlossene Kontur 20 integral um den Hohlraum 38 entlang der Längsachse des Abschnitts 8 bzw. der Längsseite 8 erstreckt.

Die geschlossene Kontur 20 wird durch eine Mehrzahl an Außenwänden 40, 42, 44 und 46 gebildet, wobei diese eine Wanddicke in einem Bereich von 1 mm bis 5 mm, vorzugsweise in einem Bereich von 2 mm bis 4 mm, aufweisen.

Weiterhin ist ersichtlich, dass die geschlossene Kontur 20 an ihrer Innenseite eine Profilstruktur 48 zur Versteifung des Batterieträgerdruckgussteils 2 aufweist. Die Profilstruktur 48 umfasst eine Mehrzahl an Profilstegen 50, 52 und 54, wobei die Profilstege 50, 52 und 54 im Wesentlichen ein Kastenprofil bilden. Die Profilstege 50, 52 und 54 erstrecken sich entlang der gesamten Innenseite der geschlossenen Kontur 20, wobei sich die Profilstege 50, 52 und 54 nur über einen Teil der Breite des Hohlraums 38 erstrecken. Es ist erkennbar, dass ein im Wesentlichen O-förmiger Bereich des Hohlraums 38 in Längsrichtung des Abschnitts 8 gesehen keine Profilstruktur 48 aufweist.

Die in dieser Spezifikation beschriebenen beispielhaften Ausführungsformen/Ausführungsbeispiele der vorliegenden Erfindung sollen sowohl einzeln als auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Bezugszeichenliste

- 2: Batterieträgerdruckgussteil
- 4: Aufnahmeraum
- 6: Rahmenstruktur
- 8: Längsseite bzw. Abschnitt des Batterieträgerdruckgussteils
- 10: Querseite bzw. Abschnitt des Batterieträgerdruckgussteils
- 12: Quersteg
- 14: Längssteg
- 16: Aussparung
- 17: Anbindungshülse
- 20: Geschlossene Kontur des Abschnitts
- 22: Öffnung für den Austritt von Gusskernen
- 24: Vorsprung
- 26: Durchgangslöcher
- 28: Anbindungsbauteil
- 30: Aufnahme
- 32: Flansch
- 34: Durchgang
- 36: Durchgang
- 38: Hohlraum
- 40: Außenwand
- 42: Außenwand
- 44: Außenwand
- 46: Außenwand
- 48: Profilstruktur
- 50: Profilsteg
- 52: Profilsteg
- 54: Profilsteg

## Patentansprüche

1. Batterieträgerdruckgussteil zur zumindest teilweisen Begrenzung eines Aufnahmeraums (4) zumindest einer als Antriebsenergiespeicher für ein elektrisch angetriebenes Fahrzeug dienenden Batteriezelle und/oder zumindest eines Batteriemoduls,
- wobei das Batterieträgerdruckgussteil (2) zumindest einen sich im Wesentlichen entlang einer Längsachse erstreckenden Abschnitt (8, 10) aufweist,
- wobei der Abschnitt (8, 10) eine im Wesentlichen geschlossene Kontur (20) aufweist,
- wobei die im Wesentlichen geschlossene Kontur (20) einen Hohlraum (38) umfasst, insbesondere einen Hohlraum (38) einschließt, und
- wobei die geschlossene Kontur (20) sich integral um den Hohlraum (38) erstreckt.

2. Batterieträgerdruckgussteil nach Anspruch 1,
**dadurch gekennzeichnet,**
- **dass** das Batterieträgerdruckgussteil (2) einstückig aus einem Leichtmetallwerkstoff, insbesondere aus einer Aluminiumlegierung, ausgebildet ist.

3. Batterieträgerdruckgussteil nach Anspruchs 1 oder 2,
**dadurch gekennzeichnet,**
- **dass** der zumindest eine Abschnitt (8, 10) zumindest einen Teil mindestens einer Längsseite (8) und/oder mindestens eine Querseite (10) einer Rahmenstruktur (6) bildet, und
- **dass** das Batterieträgerdruckgussteil (2) insbesondere eine im Wesentlichen umlaufende Rahmenstruktur (6) aufweisend Längsseiten (8) und Querseiten (10) bildet.

4. Batterieträgerdruckgussteil nach Anspruch 3,
**dadurch gekennzeichnet,**
- **dass** jeweils zumindest ein Abschnitt (8, 10) die Längsseiten (8) und/oder die Querseiten (10) im Wesentlichen vollständig bildet.

5. Batterieträgerdruckgussteil nach einem der Ansprüche 1 bis 4,
**dadurch gekennzeichnet,**
- **dass** die im Wesentlichen geschlossene Kontur (20) eines Abschnitts (8, 10) zumindest eine Öffnung (22) für den Austritt von Gusskernen, insbesondere von Sandkernen aufweist.

6. Batterieträgerdruckgussteil nach einem der Ansprüche 1 bis 5,
**dadurch gekennzeichnet,**
- **dass** die zumindest eine im Wesentlichen geschlossene Kontur (20) eines Abschnitts (8, 10) durch eine Mehrzahl an Außenwänden (40, 42, 44, 46) gebildet wird, und
- **dass** die Mehrzahl an Außenwänden (40, 42, 44, 46) eine Wanddicke in einem Bereich von 1 mm bis 5 mm, insbesondere in einem Bereich von 2 mm bis 4 mm, besonders bevorzugt in einem Bereich von 2,5 mm bis 3,5 mm aufweist.

7. Batterieträgerdruckgussteil nach einem der Ansprüche 1 bis 6,
**dadurch gekennzeichnet,**
- **dass** die geschlossene Kontur (20) des zumindest einen Abschnitts (8, 10) an ihrer Innenseite eine Profilstruktur (48) zur Versteifung des Batterieträgerdruckgussteils (2) umfasst,
- **dass** die Profilstruktur (48) eine Mehrzahl an Profilstegen (50, 52, 54) umfasst, und
- **dass** die Mehrzahl an Profilstegen (50, 52, 54) im Wesentlichen ein Kastenprofil und/oder ein Wabenprofil bilden.

8. Batterieträgergussteil nach Anspruch 7,
**dadurch gekennzeichnet,**
- **dass** sich die Profilstruktur (48) nur über einen Teil der Breite und/oder der Länge des Hohlraums (38) erstreckt.

9. Batterieträgergussteil nach einem der Ansprüche 1 bis 8,
**dadurch gekennzeichnet,**
- **dass** der zumindest eine Abschnitt (8, 10) an seiner zu den Aufnahmeraum (4) zeigenden Außenkontur zumindest eine Aufnahme (30) für zumindest eine Batteriezelle und/oder zumindest ein Batteriemodul aufweist,
- wobei die zumindest eine Aufnahme (30) insbesondere zu der Außenkontur zumindest einer Batteriezelle und/oder zumindest eines Batteriemoduls korrespondiert, und
- wobei die zumindest eine Aufnahme (30) vorzugsweise im Wesentlichen kurvenförmig, besonders bevorzugt halbzylindrisch, ausgebildet ist.

10. Batterieträgerdruckgussteil nach einem der Ansprüche 1 bis 9,
**dadurch gekennzeichnet,**
- **dass** das Batterieträgerdruckgussteil (2) im Hochdruckgussverfahren oder im Niederdruckgussverfahren unter Benutzung zumindest eines verlorenen Kerns, insbesondere eines verlorenen Sandkerns, gegossen ist.

11. Batterieträgerdruckgussteil nach einem der Ansprüche 1 bis 10,
**dadurch gekennzeichnet,**
- **dass** der Hohlraum (38) des zumindest einen Abschnitts (8, 10) mit einem energieabsorbierenden Material, insbesondere mit einem Schaum, gefüllt, insbesondere vollständig gefüllt, ist.

12. Batterieträgerdruckgussteil nach einem der Ansprüche 1 bis 11,
**dadurch gekennzeichnet,**
- **dass** der zumindest eine Abschnitt (8, 10) an seiner zu den Aufnahmeraum (4) zeigenden Außenkontur zumindest einen Flansch (32) als Auflagefläche für eine Kühlplatte aufweist.

13. Batterieträgerdruckgussteil nach einem der Ansprüche 1 bis 12,
**dadurch gekennzeichnet,**
- **dass** der zumindest eine Abschnitt (8, 10) an seinen gegenüberliegenden Außenwänden (40, 42, 44, 46) zueinander korrespondierende Durchgänge (34, 36) zur Anordnung von Kühlkanälen, einer HV-Verbindung und/oder weiteren Verbindungen zwischen der zumindest einen Batteriezelle und der Umgebung des Batterieträgerdruckgussteils (2) aufweist.

14. Batterieträgerdruckgussteil nach einem der Ansprüche 1 bis 13,
**dadurch gekennzeichnet,**
- **dass** das Batterieträgerdruckgussteil (2) einstückig aus einer Aluminiumlegierung gegossen ist; und
- **dass** die Aluminiumlegierung vorzugsweise eine AlSi-Aluminiumgusslegierung ist.

15. Verfahren zur Herstellung eines Batterieträgerdruckgussteils, nach einem der Ansprüche 1 bis 14 aus einer Leichtmetallschmelze, insbesondere aus einer Schmelze einer Aluminiumlegierung, im Hochdruckguss umfassend die Schritte:
- Anordnen zumindest eines verlorenen Kerns und/oder zumindest eines energieabsorbierenden Materials, insbesondere eines Inlays, in einem Formhohlraum umfassend zumindest zwei bewegbare Formteile;
- Einfüllen der Leichtmetallschmelze mittels eines Angusssystems in den Formholraum,
- Geschlossenhalten des Formhohlraums bis die in den Formhohlraum eingefüllte Leichtmetallschmelze im Wesentlichen erstarrt ist, und
- Öffnen des Formhohlraums und Entnahme des in dem Formhohlraum abgeformten Batterieträgerdruckgussteils.

## Claims

1. Battery carrier die-cast part for at least partially delimiting a receiving space (4) for at least one battery cell and/or at least one battery module serving as a drive energy storage device for an electrically driven vehicle,
- wherein the battery carrier die-cast part (2) has at least one section (8, 10) extending substantially along a longitudinal axis,
- wherein the section (8, 10) has a substantially closed contour (20),
- wherein the substantially closed contour (20) comprises a cavity (38), in particular encloses a cavity (38), and
- wherein the closed contour (20) extends integrally around the cavity (38).

2. Battery carrier die-cast part according to claim 1,
**characterized in that**
- the battery carrier die-cast part (2) is formed integrally from a light metal material, in particular from an aluminum alloy.

3. Battery carrier die-cast part according to claim 1 or 2,
**characterized in**
- the at least one section (8, 10) forms at least part of at least one longitudinal side (8) and/or at least one transverse side (10) of a frame structure (6), and
- the battery carrier die-cast part (2) forms, in particular, a substantially circumferential frame structure (6) having longitudinal sides (8) and transverse sides (10).

4. Battery carrier die-cast part according to claim 3,
**characterized in that**
- at least one section (8, 10) substantially completely forms the longitudinal sides (8) and/or the transverse sides (10).

5. Battery carrier die-cast part according to one of claims 1 to 4,
**characterized in that**
- the substantially closed contour (20) of a section (8, 10) has at least one opening (22) for the exit of casting cores, in particular sand cores.

6. Battery carrier die-cast part according to one of claims 1 to 5,
**characterized in that**
- the at least one substantially closed contour (20) of a section (8, 10) is formed by a plurality of outer walls (40, 42, 44, 46), and
- the plurality of outer walls (40, 42, 44, 46) has a wall thickness in a range from 1 mm to 5 mm, in particular in a range from 2 mm to 4 mm, and particularly preferred in a range from 2.5 mm to 3.5 mm.

7. Battery carrier die-cast part according to one of claims 1 to 6,
**characterized in that**
- the closed contour (20) of the at least one section (8, 10) comprises a profile structure (48) on its inner side for stiffening the battery carrier die-cast part (2),
- the profile structure (48) comprises a plurality of profile webs (50, 52, 54), and
- the plurality of profile webs (50, 52, 54) substantially form a box profile and/or a honeycomb profile.

8. Battery carrier die-cast part according to claim 7,
**characterized in that**
- the profile structure (48) extends only over part of the width and/or length of the cavity (38).

9. Battery carrier die-cast part according to one of claims 1 to 8,
**characterized in that**
- the at least one section (8, 10) has at least one receptacle (30) for at least one battery cell and/or at least one battery module on its outer contour facing the receiving space (4),
- wherein the at least one receptacle (30) corresponds in particular to the outer contour of at least one battery cell and/or at least one battery module, and
- wherein the at least one receptacle (30) is preferably designed to be substantially curved, particularly preferably semi-cylindrical.

10. Battery carrier die-cast part according to one of claims 1 to 9,
**characterized in that**
- the battery carrier die-cast part (2) is cast using a high-pressure casting process or a low-pressure casting process using at least one lost core, in particular a lost sand core.

11. Battery carrier die-cast part according to one of claims 1 to 10,
**characterized in that**
- the cavity (38) of the at least one section (8, 10) is filled, in particular completely filled, with an energy-absorbing material, in particular with a foam.

12. Battery carrier die-cast part according to one of claims 1 to 11,
**characterized that**
- the at least one section (8, 10) has at least one flange (32) on its outer contour facing the receiving space (4) as a support surface for a cooling plate.

13. Battery carrier die-cast part according to one of claims 1 to 12,
**characterized in that**
- the at least one section (8, 10) has corresponding passages (34, 36) on its opposite outer walls (40, 42, 44, 46) for arranging cooling channels, an HV connection, and/or further connections between the at least one battery cell and the environment of the battery carrier die-cast part (2).

14. Battery carrier die-cast part according to one of claims 1 to 13,
**characterized in that**
- the battery carrier die-cast part (2) is cast in integrally from an aluminum alloy; and
- the aluminum alloy is preferably an AlSi aluminum casting alloy.

15. Method for producing a battery carrier die-cast part according to one of claims 1 to 14 from a light metal melt, in particular from a melt of an aluminum alloy, in high-pressure die casting, comprising the steps:
- arranging at least one lost core and/or at least one energy-absorbing material, in particular an inlay, in a mold cavity comprising at least two movable mold parts;
- filling the mold cavity with the molten light metal by means of a gating system;
- Keeping the mold cavity closed until the molten light metal poured into the mold cavity has substantially solidified, and
- Opening the mold cavity and removing the die-cast battery carrier part molded in the mold cavity.

## Revendications

1. Pièce moulée sous pression pour support de batterie destinée à délimiter au moins partiellement un espace de logement (4) d'au moins une cellule de batterie et/ou d'au moins un module de batterie servant de réservoir d'énergie motrice pour un véhicule à propulsion électrique,
- la pièce moulée sous pression pour support de batterie (2) présentant au moins une section (8, 10) s'étendant essentiellement le long d'un axe longitudinal,
- la section (8, 10) présentant un contour (20) essentiellement fermé,
- le contour essentiellement fermé (20) comprenant une cavité (38), en particulier une cavité (38) fermée, et
- le contour fermé (20) s'étendant de manière intégrale autour de la cavité (38).

2. Pièce moulée sous pression pour support de batterie selon la revendication 1,
**caractérisée en ce que**
- la pièce moulée sous pression pour support de batterie (2) est formée d'une seule pièce à partir d'un matériau métallique léger, en particulier à partir d'un alliage d'aluminium.

3. Pièce moulée sous pression pour support de batterie selon la revendication 1 ou 2,
**caractérisée en ce que**
- la au moins une section (8, 10) forme au moins une partie d'au moins un côté longitudinal (8) et/ou au moins un côté transversal (10) d'une structure de cadre (6), et
- la pièce moulée sous pression pour support de batterie (2) forme en particulier une structure de cadre (6) essentiellement périphérique présentant des côtés longitudinaux (8) et des côtés transversaux (10).

4. Pièce moulée sous pression pour support de batterie selon la revendication 3,
**caractérisée en ce que**
- au moins une section (8, 10) forme les côtés longitudinaux (8) et/ou les côtés transversaux (10) de manière essentiellement complète.

5. Pièce moulée sous pression pour support de batterie selon l'une des revendications 1 à 4,
**caractérisée en ce que**
- le contour essentiellement fermé (20) d'une section (8, 10) présente au moins une ouverture (22) pour la sortie de noyaux de moulage, en particulier de noyaux de sable.

6. Pièce moulée sous pression pour support de batterie selon l'une des revendications 1 à 5,
**caractérisée en ce que**
- le contour essentiellement fermé (20) d'une section (8, 10) est formé par une pluralité de parois extérieures (40, 42, 44, 46), et
- la pluralité de parois extérieures (40, 42, 44, 46) présente une épaisseur de paroi comprise entre 1 mm et 5 mm, en particulier entre 2 mm et 4 mm, et de préférence entre 2,5 mm et 3,5 mm.

7. Pièce moulée sous pression pour support de batterie selon l'une des revendications 1 à 6,
**caractérisée en ce que**
- le contour fermé (20) de la au moins une section (8, 10) comprend sur sa face intérieure une structure profilée (48) pour rigidifier la pièce moulée sous pression pour support de batterie (2),
- la structure profilée (48) comprend une pluralité de nervures profilées (50, 52, 54), et
- la pluralité de nervures profilées (50, 52, 54) forme essentiellement un profilé en caisson et/ou un profilé en nid d'abeilles.

8. Pièce moulée sous pression pour support de batterie selon la revendication 7,
**caractérisée en ce que**
- la structure profilée (48) ne s'étend que sur une partie de la largeur et/ou de la longueur de la cavité (38).

9. Pièce moulée sous pression pour support de batterie selon l'une des revendications 1 à 8,
**caractérisée en ce que**
- la au moins une section (8, 10) présente, sur son contour extérieur tourné vers l'espace de logement (4), au moins un logement (30) pour au moins une cellule de batterie et/ou au moins un module de batterie,
- le au moins un logement (30) correspondant en particulier au contour extérieur d'au moins une cellule de batterie et/ou d'au moins un module de batterie, et
- le au moins un logement (30) étant de préférence essentiellement courbé, particulièrement de préférence semi-cylindrique.

10. Pièce moulée sous pression pour support de batterie selon l'une des revendications 1 à 9,
**caractérisée en ce que**
- la pièce moulée sous pression pour support de batterie (2) est moulée selon un procédé de moulage sous haute pression ou selon un procédé de moulage sous basse pression en utilisant au moins un noyau perdu, en particulier un noyau de sable perdu.

11. Pièce moulée sous pression pour support de batterie selon l'une des revendications 1 à 10,
**caractérisée en ce que**
- la cavité (38) de la au moins une section (8, 10) est remplie, en particulier complètement remplie, d'un matériau absorbant l'énergie, en particulier d'une mousse.

12. Pièce moulée sous pression pour support de batterie selon l'une des revendications 1 à 11,
**caractérisée en ce que**
- la au moins une section (8, 10) présente, sur son contour extérieur tourné vers l'espace de logement (4), au moins une bride (32) servant de surface d'appui pour une plaque de refroidissement.

13. Pièce moulée sous pression pour support de batterie selon l'une des revendications 1 à 12,
**caractérisée en ce que**
- la au moins une section (8, 10) présente, sur ses parois extérieures opposées (40, 42, 44, 46), des passages (34, 36) correspondant les uns aux autres pour la disposition de canaux de refroidissement, d'une connexion HT et/ou d'autres connexions entre la au moins une cellule de batterie et l'environnement de la pièce moulée sous pression pour support de batterie (2).

14. Pièce moulée sous pression pour support de batterie selon l'une des revendications 1 à 13,
**caractérisée en ce que**
- la pièce moulée sous pression pour support de batterie (2) est moulée d'un seul tenant à partir d'un alliage d'aluminium ; et
- l'alliage d'aluminium est de préférence un alliage d'aluminium moulé AlSi.

15. Procédé de fabrication d'une pièce moulée sous pression pour support de batterie, selon l'une des revendications 1 à 14, à partir d'un métal léger fondu, en particulier à partir d'un alliage d'aluminium fondu, dans un moulage sous haute pression, comprenant les étapes suivantes :
- disposition d'au moins un noyau perdu et/ou d'au moins un matériau absorbant l'énergie, en particulier d'un insert, dans une cavité de moule comprenant au moins deux parties de moule mobiles ;
- remplir la cavité du moule avec le métal léger fondu à l'aide d'un système d'injection ;
- maintenir la cavité du moule fermée jusqu'à ce que le métal léger fondu versé dans la cavité du moule soit pratiquement solidifié, et
- ouverture de la cavité du moule et retrait de la pièce moulée sous pression pour support de batterie moulée dans la cavité du moule.
